# DEMANDE DE BREVET EUROPEEN

(11) **EP 3 991 802 A1**
(43) Date de publication de la demande: **04.05.2022**
(21) Numéro de dépôt: 21206086.7
(22) Date de dépôt: 02.11.2021
(51) Int. Cl.: A62C 3/07, E04H 4/00

(54) **SYSTÈME D EXTINCTION D'UN FEU ET/OU D EMPÊCHEMENT DE PRISE OU REPRISE D'UN FEU DE VÉHICULE ÉLECTRIQUE, PROCÉDÉ DE FONCTIONNEMENT ASSOCIÉ COMPRENANT UNE ÉTAPE DE SOULÈVEMENT PRÉALABLE DU VÉHICULE DU SOL**

(30) Priorité: 02.11.2020 FR 2011227
(71) Demandeur: Commissariat à l'Energie Atomique et aux Energies Alternatives, 75015 Paris (FR)
(72) Inventeur: VINCENT, Rémi, 38054 GRENOBLE Cedex 09 (FR); ICART, Gilles, 38054 GRENOBLE Cedex 09 (FR)
(74) Mandataire: Nony

(57) **Abrégé**

Système d'extinction d'un feu et/ou d'empêchement de prise ou reprise d'un feu de véhicule électrique, procédé de fonctionnement associé comprenant une étape de soulèvement préalable du véhicule du sol.

L'invention concerne un système (1) d'extinction d'un feu et/ou d'empêchement de prise ou reprise d'un feu de véhicule électrique (V) intégrant un module ou un pack-batterie comprenant une pluralité d'accumulateurs électrochimiques, notamment des accumulateurs métal-ion, comprenant :
- une structure gonflable autoportante (2), dont la forme et les dimensions à l'état déployé sont adaptées pour soulever le véhicule électrique du sol, créer un revêtement «liner» (21) entre le sol et le véhicule électrique, et créer une barrière périphérique continue avec le revêtement «liner», fermée sur elle-même, autour du véhicule électrique;
- un dispositif d'alimentation en liquide pour remplir au moins partiellement le volume étanche (R) délimité à l'intérieur de la barrière périphérique et par le revêtement «liner», de sorte à immerger au moins le module ou pack-batterie dans le liquide.

## Description

### Domaine technique

La présente invention concerne le domaine des véhicules électriques.

L'invention vise principalement à éteindre un feu et/ou à éviter une reprise d'un feu de véhicule électrique intégrant un module ou un pack-batterie à plusieurs accumulateurs électrochimiques, plus particulièrement des accumulateurs métal-ion. Un usage de l'invention à titre préventif pour réduire le risque d'une prise de feu d'un véhicule électrique, en particulier accidenté, est également possible.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Par « véhicule électrique », on entend ici et dans le cadre de l'invention, tout véhicule automobile dont la propulsion est électrique ou hybride et qui intègre au moins un module ou un pack-batterie à plusieurs accumulateurs électrochimiques, plus particulièrement des accumulateurs métal-ion.

### Technique antérieure

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif ou d'un défaut de fonctionnement d'une cellule.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»)*.* Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Il a déjà été constaté un certain nombre de cas d'incendies de véhicules électriques intégrant une batterie, ou pack-batterie à plusieurs accumulateurs Li-ion, qui furent particulièrement difficiles à maitriser.

Ceci est principalement dû à la reprise du feu, des fois plusieurs heures après son extinction. Par exemple, il a été rapporté récemment le cas d'un véhicule électrique ayant pris feu dans un garage, feu maitrisé par des pompiers. Environ 4h30 après ce contrôle, une reprise du feu du véhicule a eu lieu lors de son chargement sur le véhicule de dépannage.

Une prise ou reprise du feu provient généralement d'éléments de la batterie (modules ou accumulateurs (cellules)) ayant été électriquement déconnectés, bien qu'encore chargés. Ainsi, aléatoirement, par exemple en cas de déplacement du véhicule incendié, ces éléments peuvent produire des arcs électriques susceptibles d'initier à nouveau un incendie.

Pour éviter cela, il est nécessaire d'appliquer une solution permettant pendant l'extinction de l'incendie, après celle-ci, ou même préventivement de décharger électriquement l'intégralité d'un module ou pack-batterie d'un véhicule électrique .

Le but de l'invention est de répondre au moins en partie à ce besoin.

### Exposé de l'invention

Pour ce faire, l'invention concerne, sous l'un de ses aspects, un système d'extinction d'un feu et/ou d'empêchement de reprise d'un feu de véhicule électrique intégrant un module ou un pack-batterie comprenant une pluralité d'accumulateurs électrochimiques, notamment des accumulateurs métal-ion, comprenant :
- une structure gonflable autoportante, dont la forme et les dimensions à l'état déployé sont adaptées pour soulever le véhicule électrique du sol, créer un revêtement «liner» entre le sol et le véhicule électrique, et créer une barrière périphérique continue avec le revêtement «liner», fermée sur elle-même, autour du véhicule électrique;
- un dispositif d'alimentation en liquide pour remplir au moins partiellement le volume étanche délimité à l'intérieur de la barrière périphérique et par le revêtement «liner», de sorte à immerger au moins le module ou pack-batterie dans le liquide.

Selon une variante de réalisation avantageuse, la structure est gonflable par liquide au moins en partie et comprend à cet effet au moins un orifice de remplissage par liquide pour le gonflage au moins de la partie de la structure adaptée pour soulever le véhicule et de la partie adaptée pour créer la barrière périphérique.

Avantageusement, l'orifice de remplissage est adapté pour être connecté au dispositif d'alimentation en liquide.

Selon un mode de réalisation avantageux, la structure gonflable comprend au moins un coussin de levage se déployant à la verticale en dessous du véhicule lors de son gonflage pour soulever le véhicule. On peut prévoir un pluralité de coussins gonflables à l'eau, de préférence directement celle sous pression provenant d'un véhicule d'intervention, comme un camion de pompiers. Alternativement à l'eau, de l'air comprimé peut être utilisé pour gonfler le ou les coussins.

Selon une variante de réalisation avantageuse, la structure gonflable comprend en outre une bande souple qui s'étend depuis la partie inférieure des coussins et se déploie lors de son gonflage en dessous du véhicule électrique soulevé vers sa périphérie, pour créer le revêtement «liner».

Selon un autre mode de réalisation avantageux, la structure gonflable comprend en outre au moins une d'enveloppe souple fermée sur elle-même sous la forme d'un boudin continu avec le revêtement «liner», et se déployant depuis le revêtement «liner» lors du gonflage pour créer la barrière périphérique.

Selon un premier mode, la structure gonflable comprend une pluralité de boudins interconnectés fluidiquement dans leur partie inférieure et qui s'étendent selon la verticale lors de leur déploiement.

Avantageusement, les boudins verticaux sont régulièrement espacés entre eux, de sorte à avoir un gonflage uniforme et par là une barrière uniforme sur toute sa périphérie.

Selon un deuxième mode, la structure gonflable comprend un ou une pluralité de boudins annulaires s'étendant chacun selon au moins une circonférence horizontale lors de leur déploiement.

Selon ce deuxième mode, et une variante avantageuse, la structure gonflable comprend un unique boudin annulaire adapté pour, lors du remplissage du volume étanche, soulever en partie le «liner» de sorte à créer la barrière périphérique conjointement avec le boudin annulaire. Cette variante est simple à mettre en œuvre avec un unique boudin annulaire horizontal qui va flotter en quelque sorte et faire remonter le «liner» sur les côtés du véhicule lors du remplissage du volume étanche.

Selon une variante particulièrement avantageuse, au moins une partie des boudins comprend dans leur partie supérieure un orifice débouchant, tel qu'en configuration déployée à la verticale, à l'issue de leur gonflage par le liquide, ce dernier remplisse par débordement depuis les boudins le volume étanche délimité à l'intérieur de la barrière et par le revêtement «liner».

Le liquide de remplissage du volume étanche est avantageusement de l'eau.

Dans ce cas, le système comprend avantageusement des sels solubles dans l'eau, positionnés préalablement au sein d'au moins une zone de la structure à l'état non déployée de sorte que lesdits sels sont en contact avec l'eau lors du remplissage du volume étanche (R).

De préférence, la structure gonflable est au moins en partie constituée d'un tissu à base de fibres d'aramide. Un tel tissu est particulièrement adapté pour faire résister aux flammes la structure, lors de son installation.

De préférence encore, le tissu étant étanchéifié au moins dans sa partie intérieure destinée à être en contact avec le liquide par un film en polytétrafluoroéthylène (PTFE).

Le dispositif d'alimentation en liquide est avantageusement un véhicule de lutte contre l'incendie, notamment un camion-citerne, un véhicule d'intervention. Ainsi, des pompiers intervenant pour un feu de véhicule électrique disposent d'un système complètement autonome, la structure gonflable pouvant être aisément embarquée à bord d'un véhicule et donc déployée très rapidement in situ.

L'invention a également pour objet un procédé de fonctionnement d'un système qui vient d'être décrit, comprenant les étapes suivantes :
i/ positionnement de la structure gonflable en dessous du véhicule électrique ;
ii/ gonflage d'une première partie de la structure en dessous du véhicule électrique pour le soulever ;
iii/ gonflage d'une deuxième partie de la structure pour qu'elle se déploie en dessous du véhicule électrique soulevé et vers la périphérie de celui-ci de sorte à créer le revêtement «liner»;
iv/ une fois le revêtement «liner» déployé, gonflage d'une troisième partie de la structure de sorte à créer la barrière périphérique autour d'un véhicule électrique ;
v/ remplissage par un liquide depuis le dispositif d'alimentation, d'au moins une partie du volume étanche délimité à l'intérieur de la barrière périphérique et par le revêtement «liner», afin d'immerger au moins le module ou pack-batterie.

Optionnellement, une fois l'étape iii/ de déploiement du «liner» réalisée, on peut réaliser le dégonflage de la première partie de la structure et donc faire reposer le véhicule sur le sol avec le «liner» interposé.

Selon un mode de réalisation avantageux, les étapes ii/ à v/ sont réalisées l'une après l'autre au moyen du seul dispositif d'alimentation, l'étape v/ étant réalisée par débordement depuis les boudins en tant que troisième partie de la structure une fois gonflés.

Avantageusement, on utilise de l'eau, éventuellement contenant des sels, en tant que liquide de gonflage et de remplissage à la fois pour les étapes iv/ à v/. Des sels augmentent avantageusement la conductivité de l'eau et donc garantissent une décharge électrique du module ou pack-batterie une fois immergé. Afin de simplifier le travail des intervenants sur un feu, notamment des pompiers, les sels peuvent être directement contenus dans la structure gonflable, notamment les boudins, ce qui permet dans la configuration où l'eau sert au gonflage puis au remplissage du volume d'immersion une dilution efficace lors de l'ajout de l'eau.

Selon une variante avantageuse, on réalise les étapes iii/ à v/ par le seul gonflage continu au moyen du liquide des deuxième et troisième parties de structure, interconnectées fluidiquement.

Alternativement, on réalise les étapes iii/ et iv/ par le seul gonflage continu au moyen d'air ou autre gaz, des deuxième et troisième parties de structure, interconnectées fluidiquement. La troisième partie de la structure peut également fait office de seconde partie de la structure. Ainsi, l'invention consiste essentiellement en un système qui réalise l'extinction d'un feu d'un véhicule électrique et empêche toute prise ou reprise de feu au moyen d'une structure gonflable autoportante, qui en configuration gonflée et fermée sur elle-même, forme une barrière à la fois périphérique autour du véhicule et un revêtement «liner» en dessous de ce dernier, dont le volume intérieur étanche qui y est délimité est immergé par un liquide assurant le contrôle du feu et la décharge électrique du module ou du pack-batterie du véhicule.

La structure souple gonflable permet aux intervenants, en particulier aux pompiers, d'éviter de transporter des bacs de rétention rigides particulièrement imposants et nécessitant des moyens de levage de véhicule.

Cette structure devient autoportante par le gonflage qui est avantageusement réalisée par le même liquide depuis le dispositif d'alimentation, qui peut remplir le volume délimité par la barrière par débordement depuis la structure déployée.

Les avantages de l'invention sont nombreux parmi lesquels on peut citer :
- un système simple, facile et rapide à mettre en œuvre autour d'un véhicule électrique en feu ;
- une structure gonflable qui peut être embarquée rapidement et déployée aisément et rapidement depuis un véhicule d'intervention, tel qu'un camion-citerne ou un camion de pompiers ;
- la garantie d'une extinction de feu et d'empêchement de toute reprise par la décharge électrique induite par l'immersion du module ou du pack-batterie du véhicule électrique ;
- la récupération possible de tout le liquide, éventuellement chargé en particules susceptibles d'avoir été émises par le véhicule, qui est contenu dans le volume étanche délimité par la barrière périphérique et le revêtement «liner».

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

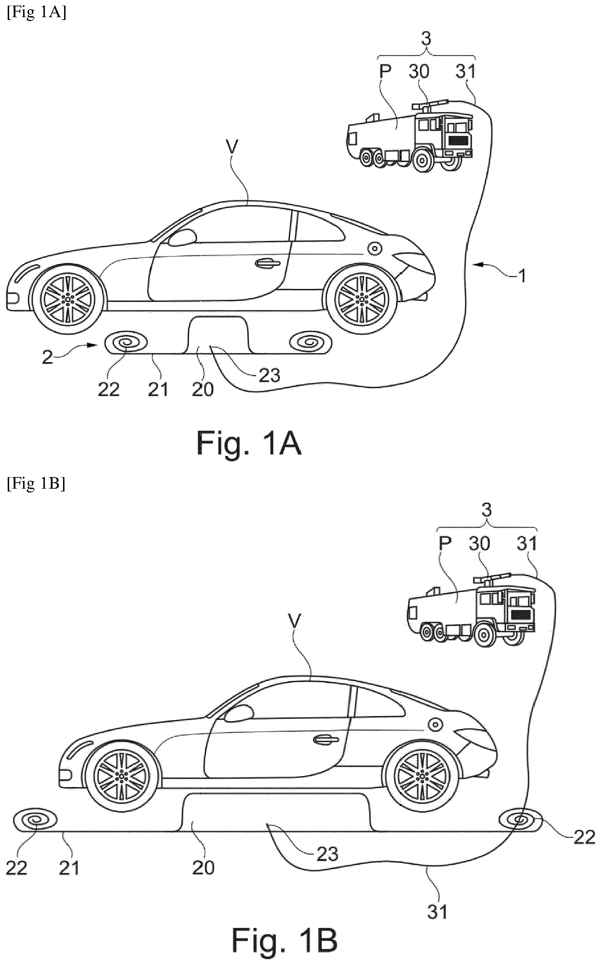

[Fig 1A] la figure 1A est une vue schématique en perspective et en coupe d'une première étape de fonctionnement d'un système d'extinction de feu et d'empêchement de reprise de feu selon l'invention, qui consiste à mettre la structure gonflable du système sous un véhicule électrique.
[Fig 1B] la figure 1B est une vue schématique en perspective et en coupe d'une deuxième étape consécutive à la première étape, qui consiste à gonfler la structure pour soulever le véhicule électrique et la déployer en dessous pour réaliser un revêtement «liner».

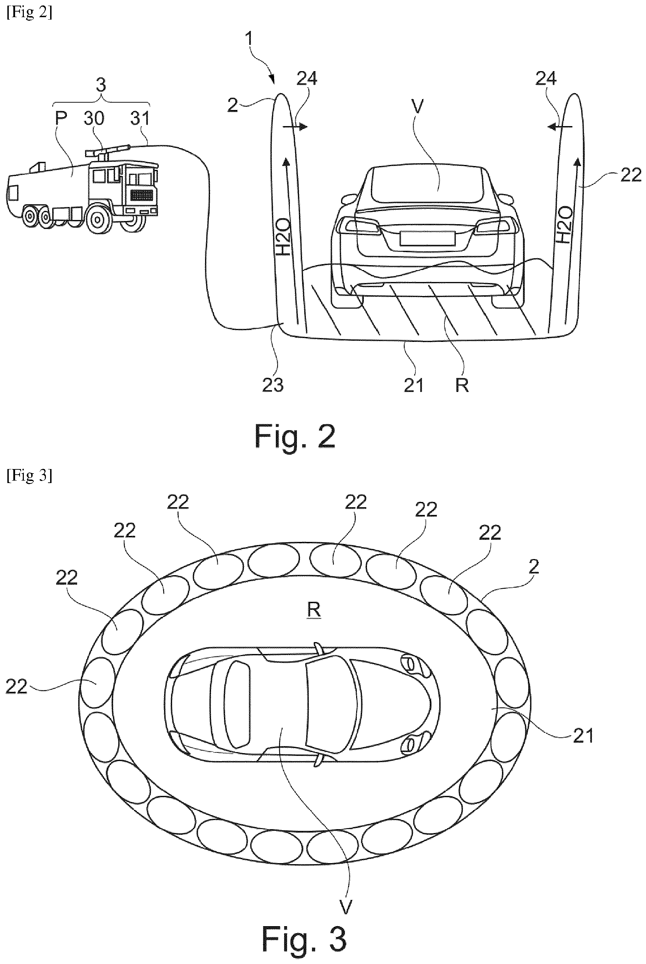

[Fig 2] la figure 2 est une vue schématique en perspective et en coupe d'un système d'extinction de feu et d'empêchement de reprise de feu selon un premier mode de réalisation de l'invention, tel qu'il est en configuration installée autour et sous un véhicule électrique, avec une connexion à un véhicule de pompiers en tant que dispositif d'alimentation en eau pour immerger au moins le pack-batterie du véhicule.
[Fig 3] la figure 3 est une vue de dessus montrant la structure autoportante d'un système selon l'invention selon la figure 2, en configuration installée autour et sous un véhicule électrique.

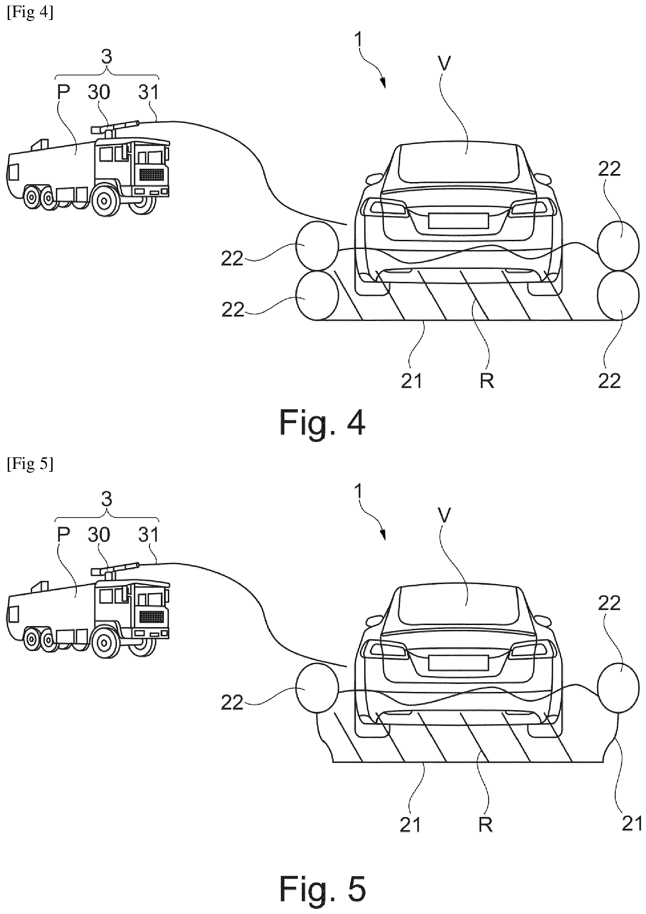

[Fig 4] la figure 4 est une vue schématique en perspective et en coupe d'un système d'extinction de feu et d'empêchement de reprise de feu selon un deuxième mode de réalisation de l'invention, tel qu'il est en configuration installée autour et sous un véhicule électrique, avec une connexion à un véhicule de pompiers en tant que dispositif d'alimentation en eau pour immerger au moins le pack-batterie du véhicule.
[Fig 5] la figure 5 est une vue schématique en perspective et en coupe d'un système d'extinction de feu et d'empêchement de reprise de feu selon une variante du deuxième mode de réalisation de l'invention, tel qu'il est en configuration installée autour et sous un véhicule électrique, avec une connexion à un véhicule de pompiers en tant que dispositif d'alimentation en eau pour immerger au moins le pack-batterie du véhicule.

### Description détaillée

Les termes « inférieur », « supérieur », « dessus », « dessous », sont à comprendre par rapport à une structure autoportante dans sa configuration gonflée et installée, qui s'étend à la verticale en créant une barrière périphérique fermée sur elle-même.

Les figures 1A, 1B à 3 montrent un système 1 selon l'invention qui permet l'extinction d'un feu de véhicule électrique et empêche toute prise ou reprise de feu de ce dernier.

Le système 1 comprend une structure autoportante 2 constituée d'un ou plusieurs coussins de levage 20, d'une bande souple 21, qui s'étend depuis la partie inférieure des coussins et qui est destinée à former un revêtement «liner» sous le véhicule électrique, et d'une pluralité d'enveloppes souples alignées et chacune fermées sur elles-mêmes sous la forme de boudins 22 continus avec le revêtement «liner», les boudins étant interconnectés fluidiquement dans leur partie inférieure.

Les boudins 22 sont régulièrement espacés entre eux, de sorte à avoir un gonflage uniforme. Le(s) coussin(s) de levage 20, le revêtement «liner» 21 et les boudins 22 sont avantageusement constitués d'un tissu à base de fibres d'aramide revêtus au moins sur leur partie intérieure destinée à être en regard du véhicule V par un film en polytétrafluoroéthylène (PTFE).

Au moins une partie des boudins 22 comprend dans leur partie inférieure un orifice d'alimentation 23 qui est connectée à un dispositif 3 d'alimentation en eau. Comme montré en figures 1A, 1B et 2, ce dispositif 3 d'alimentation peut être un camion de pompier P relié à l'orifice d'alimentation 22 depuis la lance à incendie 30 par un tuyau adapté 31.

Au moins une partie des boudins 22 comprend également dans leur partie supérieure un orifice débouchant 24.

Le fonctionnement du système est le suivant.

Etape i/ : Un intervenant, notamment un pompier vient positionner la structure gonflable 2 à coussins de levage 20 en dessous d'un véhicule électrique V en feu ou dont le feu vient d'être éteint.

Etape ii/: une fois le dispositif d'alimentation en eau 3 connecté à l'orifice d'alimentation 23 des coussins de levage 20, on alimente en eau ces derniers.

Cela provoque le soulèvement du véhicule, qui peut être de l'ordre de quelques centimètres pour une voiture (figure 1A).

Etape iii/: une fois le soulèvement réalisé, on procède au gonflage de la bande souple 21, préalablement enroulée, pour qu'elle se déploie en dessous du véhicule électrique soulevé V et vers la périphérie de celui-ci de sorte à créer le revêtement «liner». Ce gonflage peut être réalisé par simple actionnement d'une vanne dans le système sans avoir à déconnecté le dispositif 3 d'alimentation en eau. Grâce à la pression de l'eau, la bande souple 21 se déroule et passe sous les roues du véhicule V soulevé (figure 1B).

Etape iv/ : une fois le revêtement «liner» déployé, on procède au gonflage des boudins 22 qui se déployent à la verticale et assure l'autoportance de la structure 2 tout en créant une barrière périphérique autour du véhicule V, qui délimite un volume intérieur étanche ou réservoir étanche R. Ce gonflage peut aussi être réalisé par simple actionnement d'une vanne dans le système sans avoir à déconnecté le dispositif 3 d'alimentation en eau

Etape v/ : Une fois que l'eau a atteint le ou les orifices débouchant 24, elle déborde des boudins 22 vers le réservoir R. Le réservoir R étant par ailleurs étanche, notamment grâce au revêtement «liner» 21, il se remplit donc d'eau.

Le remplissage du réservoir étanche R est réalisé jusqu'à que l'immersion au moins du module ou du pack-batterie équipant le véhicule V soit réalisée.

L'immersion obtenue permet de garantir à coup sûr la décharge électrique du module ou pack-batterie du véhicule V et par là permet d'empêcher toute reprise de feu.

Selon un deuxième de réalisation, la structure gonflable selon l'invention peut être constitué d'un ou plusieurs boudins 22 annulaires qui une fois gonflés s'étendent chacun selon une circonférence horizontale autour du véhicule.

En cas de pluralité de boudins, ceux-ci sont avantageusement superposés et interconnectés fluidiquement entre eux pour permettre leur communication lors de leur gonflage. Cette configuration est montrée en figure 4.

Une variante à unique boudin annulaire 22 à l'horizontal est montrée en figure 5.

Le boudin unique (figure 5) ou la superposition de boudins (figure 4)assure la fermeture périphérique du réservoir R. Cette configuration a l'avantage de favoriser une étape simultanée de déploiement du «liner» lors du gonflage du ou des boudins, surtout si ceux-ci sont gonflés à l'air. Autrement dit, c'est la mise sous pression du ou des boudins, surtout celui inférieur, qui aide au déploiement du «liner». Ce mode a en outre pour avantage un gain de poids.

Selon une variante du deuxième mode, telle qu'illustrée en figure 5, le boudin unique 22, annulaire et horizontal, est gonflé avec un fluide de densité notablement plus faible que le liquide de remplissage du réservoir R. Préférentiellement, ce boudin 22 est gonflé à l'air comprimé. Ce boudin 22 repose initialement sur le sol à l'issue de l'étape de son gonflage, cette dernière ayant pour conséquence également le déploiement par traction vers l'extérieur du «liner». Lors du remplissage du réservoir R par le liquide, la différence de densité entre le fluide contenu dans le boudin et le liquide de remplissage entraine une élévation par flottaison du boudin avec le niveau du liquide, cette élévation du boudin entrainant également le soulèvement «liner» sur son pourtour, pour créer une paroi périphérique autour du véhicule, ayant une composante verticale notable. La combinaison du boudin unique annulaire 22 et de la partie sensiblement verticale du «liner» 21 assurent ici le rôle de barrière de fermeture périphérique du réservoir R. Cette configuration ayant l'avantage de réduire la quantité de matière nécessaire pour la structure gonflable, et donc son volume global à l'état replié. Par conséquent, la structure gonflable est transportable et manipulable plus facilement.

Des sels solubles peuvent être positionnés dans le système, qui une fois mis en solution par l'apport d'eau permettent une décharge plus efficace et rapide du module ou pack-batterie. Il peut s'agir par exemple de sels solides NaCl.

Ces sels peuvent être ajoutés dans le réservoir R par les utilisateurs, par exemple les pompiers, une fois la structure gonflable mise en place et avant ou pendant le remplissage de celle-ci. Afin d'éviter cette étape d'ajout et rendre ainsi l'intervention plus simple, ces sels peuvent également être déjà présents sous forme solide dans la structure repliée, avant son déploiement et gonflage, par exemple placés dans le «liner» ou sur la face externe des boudins faisant partie de l'espace R et en contact avec l'eau de remplissage. Dans le cas d'un remplissage par eau avec débordement des boudins périphériques 22, les sels peuvent être directement positionnés au sein des boudins 22. Dans ce dernier cas, les sels sont solubilisés lors du remplissage par l'eau des boudins, la solution se déversant ensuite dans le réservoir R par les ouvertures supérieures 24 des boudins.

D'autres variantes et améliorations peuvent être envisagées sans pour autant sortir du cadre de l'invention.

Par exemple, si dans l'ensemble des exemples illustrés, la structure gonflable autoportante est constituée d'une pluralité de boudins gonflés à l'eau d'immersion du pack-batterie du véhicule électrique, toute autre structure gonflable pour créer une barrière périphérique que l'on peut mettre aisément autour du véhicule et qui peut être gonflée, soit à l'air soit par un liquide qui sert également à l'immersion du pack-batterie peut tout-à-fait convenir. Optionnellement, une fois le revêtement «liner» déployé sous les roues du véhicule électrique, on peut procéder au dégonflage du ou des coussins de levage pour ramener le véhicule au sol avec le «liner» interposé.

## Revendications

1. Système (1) d'extinction d'un feu et/ou d'empêchement de prise ou reprise d'un feu de véhicule électrique (V) intégrant un module ou un pack-batterie comprenant une pluralité d'accumulateurs électrochimiques, notamment des accumulateurs métal-ion, comprenant :
- une structure gonflable autoportante (2), dont la forme et les dimensions à l'état déployé sont adaptées pour soulever le véhicule électrique du sol, créer un revêtement «liner» (21) entre le sol et le véhicule électrique, et créer une barrière périphérique continue avec le revêtement «liner», fermée sur elle-même, autour du véhicule électrique;
- un dispositif d'alimentation en liquide (3) pour remplir au moins partiellement le volume étanche (R) délimité à l'intérieur de la barrière périphérique et par le revêtement «liner», de sorte à immerger au moins le module ou pack-batterie dans le liquide.

2. Système (1) selon la revendication 1, la structure comprenant au moins un orifice de remplissage (23) pour le gonflage au moins de la partie de la structure adaptée pour soulever le véhicule et de la partie adaptée pour créer la barrière périphérique.

3. Système (1) selon la revendication 2, l'orifice de remplissage étant adapté pour être connecté au dispositif d'alimentation en liquide.

4. Système (1) selon l'une des revendications précédentes, la structure gonflable comprenant au moins un coussin de levage (20) se déployant à la verticale en dessous du véhicule lors de son gonflage pour soulever le véhicule.

5. Système (1) selon la revendication 4, la structure gonflable comprenant en outre une bande souple (21) qui s'étend depuis la partie inférieure des coussins et se déploie lors de son gonflage en dessous du véhicule électrique soulevé vers sa périphérie, pour créer le revêtement «liner».

6. Système (1) selon l'une des revendications 4 ou 5, la structure gonflable comprenant en outre au moins une enveloppe souple fermée sur elle-même sous la forme d'un boudin (22) continu avec le revêtement «liner» et se déployant depuis le revêtement «liner» lors du gonflage pour créer la barrière périphérique.

7. Système (1) selon la revendication 6, la structure gonflable comprenant une pluralité de boudins (22) interconnectés fluidiquement dans leur partie inférieure et qui s'étendent selon la verticale lors de leur déploiement.

8. Système (1) selon la revendication 7, les boudins verticaux étant régulièrement espacés entre eux de sorte à avoir un gonflage uniforme et par là une barrière uniforme sur toute sa périphérie.

9. Système (1) selon la revendication 6, la structure gonflable comprenant un ou une pluralité de boudins annulaires s'étendant chacun selon au moins une circonférence horizontale lors de leur déploiement.

10. Système (1) selon la revendication 9, la structure gonflable comprenant un unique boudin annulaire adapté pour, lors du remplissage du volume étanche, soulever en partie le «liner» afin de créer la barrière périphérique conjointement avec le boudin annulaire.

11. Système (1) selon l'une des revendications 6 à 8 en combinaison avec la revendication 3, au moins une partie des boudins comprenant dans leur partie supérieure un orifice débouchant (24), tel qu'en configuration déployée à la verticale, à l'issue de leur gonflage par le liquide, ce dernier remplisse par débordement depuis les boudins le volume étanche délimité à l'intérieur de la barrière et par le revêtement «liner».

12. Système (1) selon l'une des revendications précédentes, le liquide de remplissage du volume étanche (R) étant de l'eau.

13. Système (1) selon la revendication 12, comprenant des sels solubles dans l'eau positionnés préalablement au sein d'au moins une zone de la structure à l'état non déployée de sorte que lesdits sels sont en contact avec l'eau lors du remplissage du volume étanche (R).

14. Système (1) selon l'une des revendications précédentes, la structure gonflable étant au moins en partie constituée d'un tissu à base de fibres d'aramide.

15. Système (1) selon la revendication 14, le tissu étant étanchéifié au moins dans sa partie intérieure destinée à être en contact avec le liquide par un film en polytétrafluoroéthylène (PTFE).

16. Système (1) selon l'une des revendications précédentes, le dispositif d'alimentation en liquide étant un véhicule de lutte contre l'incendie, notamment un camion-citerne, un véhicule d'intervention.

17. Procédé de fonctionnement d'un système selon l'une des revendications 7 à 16 prise en dépendance avec la revendication 6, comprenant les étapes suivantes :
i/ positionnement de la structure gonflable en dessous du véhicule électrique ;
ii/ gonflage d'une première partie de la structure en dessous du véhicule électrique pour le soulever ;
iii/ gonflage d'une deuxième partie de la structure pour qu'elle se déploie en dessous du véhicule électrique soulevé et vers la périphérie de celui-ci de sorte à créer le revêtement «liner»;
iv/ une fois le revêtement «liner» déployé, gonflage d'une troisième partie de la structure de sorte à créer la barrière périphérique autour d'un véhicule électrique ;
v/ remplissage par un liquide depuis le dispositif d'alimentation, d'au moins une partie du volume étanche délimité à l'intérieur de la barrière périphérique et par le revêtement «liner», afin d'immerger au moins le module ou pack-batterie.

18. Procédé selon la revendication 17, le système étant selon la revendication 11 ou selon l'une des revendications 12 à 16 prise en dépendance avec la revendication 11, les étapes ii/ à v/ étant réalisées l'une après l'autre au moyen du seul dispositif d'alimentation, l'étape v/ étant réalisée par débordement depuis les boudins en tant que troisième partie de la structure une fois gonflés.

19. Procédé selon la revendication 17 ou 18, selon lequel on utilise de l'eau, éventuellement contenant des sels, en tant que liquide de remplissage pour les étapes iv/ à v/.

20. Procédé selon l'une des revendications 17 à 19, selon lequel on réalise les étapes iii/ à v/ par le seul gonflage continu au moyen du liquide, des deuxième et troisième parties de structure, interconnectées fluidiquement.

21. Procédé selon la revendication 17, selon lequel on réalise les étapes iii/ et iv/ par le seul gonflage continu au moyen d'air ou autre gaz, des deuxième et troisième parties de structure, interconnectées fluidiquement.
